# EUROPEAN PATENT SPECIFICATION

(11) **EP 0 915 358 B1**
(45) Date of publication and mention of the grant of the patent: **12.12.2007**
(21) Application number: 98309078.8
(22) Date of filing: 05.11.1998
(51) Int. Cl.: G02F 1/09, G02B 6/26

(54) **Multi-stage combined optical device**
Mehrstufige kombinierte optische Vorrichtung
Dispositif optique à étages multiples combinés

(30) Priority: 07.11.1997 KR 9731395 U; 17.11.1997 KR 9760603
(43) Date of publication of application: 12.05.1999
(73) Proprietor: SAMSUNG ELECTRONICS CO., LTD., Suwon-City, Kyungki-do (KR)
(72) Inventor: Park, Ki-soo, Paldal-gu, Suwon-City, Kyungki-do (KR); Sung, Ki-suk, Suwon-City, Kyungki-do (KR); Yun, Jae-chun, Suwon-City, Kyungki-do (KR); Tae, Sang-yeoung, Kwonsun-gu, Suwon-City, Kyungki-do (KR); Seo, Man-soo, Nam-gu, Taegu-city (KR)
(74) Representative: Brandon, Paul Laurence

(56) References cited:
- EP-A- 0 054 411
- WO-A-98/33080
- FR-A- 2 737 584
- US-A- 5 402 260

## Description

The present invention relates to a multi-stage combined optical device that in use is employed between optical fibers, for transmitting light traveling in one direction, blocking light traveling in the opposite direction, and separating incident light power.

Generally, a multi-stage combined optical device includes an optical isolator for blocking a reverse ray using polarization modes, and first and second collimators disposed on light receiving and emitting planes of the optical isolator, for focusing light incident onto/output from first and second optical fibers, respectively.

A conventional optical isolator using polarization modes, positioned on a light path between two optical fibers, transmits forward rays and blocks reverse rays.

To this end, the optical isolator comprises a first polarizer of a birefringent crystal wedge shape, a Faraday rotator, and a second polarizer. Thus, light traveling in a forward direction, that is, rays traveling in sequence from the first polarizer to the Faraday rotator and to the second polarizer, are separated into an ordinary ray and an extraordinary ray while passing through the first and second polarizers, to then be directed to the optical fibers. Here, the difference between the light path between the ordinary ray and the extraordinary ray is defined as a walk-off. If the walk-off is large, a time delay between the ordinary ray and the extraordinary ray is produced, which generates a polarization mode dispersion.

To solve the above-described problem, the applicant of the present invention has proposed an optical isolator using polarization modes, which can reduce walk-off without additional optical elements, in U.K. Patent Application No. 9710814.6.

The proposed optical isolator is constructed to suppress traveling of a reverse ray by differing traveling paths of the forward ray and reverse ray, and is used in transmitting a channel signal, i.e., a single light signal. Thus, in an optical amplifier such as an EDFA (Erbium Doped Fiber Amplifier), an optical isolator for guiding an incident light containing information in a traveling direction, and an optical isolator for suppressing a backwardly incident light to transmit an EDF (Erbium Doped Fiber) must be separately provided, which is an impediment in making a compact optical amplifier.

Also, in order to detect the light power of an incident ray, a tap for transmitting most of incident rays and reflecting parts thereof and a photodetector for receiving light reflected from the tap are installed in a front end of the optical isolator. However, the tap adds to cost, size and complexity of the optical amplifier.

FR 2737584 describes a light amplifier constructed with only one multi-stage optical isolator so as to reduce size and fabrication costs. The multi-stage optical isolator has two input ports on one side and two output ports on the other. A source pump generates light used to amplify weak input light. A wavelength division modulator 2 division-modulates wavelengths of the light generated by the source pump and the light forwarded through the second output multi-stage optical isolator. An optical fibre amplifies the light from the wavelength division modulator and emits amplified light through the first input port of the multi-stage optical isolator.

US 5,402,260 describes an element for an optical isolator which is formed by alternately bonding together at least one flat plate-shaped Faraday rotator and two or more flat plate-shaped polarizers, the optical isolator element having an outer peripheral surface which is cut such that, when the outer peripheral surface is disposed parallel to an optical nazis, incidence and emergence planes of the element are inclined at a predetermined angle with respect to a plane perpendicular to the optical axis. The optical isolator element may be formed with a rectangular configuration in conformity to the arranged form of a plurality of laser active regions of a laser array.

EP 0 661 579 describes an optical isolator which utilises a pair of polarization selective elements, as for example birefringent wedges, and an integral Faraday rotator aligned therewith to perform optical signal isolation without introducing the polarization mode dispersion inherent in conventional polarization independent optical isolators. Optical isolation is accomplished by passing a forward-directed optical signal through a first birefringent element which separates the optical signal into two orthogonal states. The two orthogonal polarization states exchange identities upon entering the second birefringent element from the Faraday rotation element and are again deflected by the second birefringent element so that they emerge from the second element parallel to each other and, having travelled the same optical path length, without any polarization mode dispersion. Both polarization states of the reverse propagating optical signal are sufficiently angularly deflected to avoid coupling with the optical signal path.

It is an aim of at least preferred embodiments of the present invention to provide a multi-stage combined optical device for implementing a two-channel structure by which backward traveling of at least two rays can be suppressed.

According to the present invention there is provided a multi-stage combined optical device as set fourth in claim 1 appended hereto. Further features of the device will be apparent from the dependent claims and the description which follows.

According to a preferred embodiment of the invention there is provided a multi-stage combined optical device comprising a first collimator for collimating a ray emitted from a first optical fiber, an optical isolator having a first polarizer for birefringently transmitting an incident ray into an ordinary ray and an extraordinary ray, a Faraday rotator for rotationally transmitting the incident ray, and a second polarizer for inversely transmitting the incident ordinary ray and extraordinary ray, sequentially disposed on an optical path, a second collimator for focusing the light transmitted through the second polarizer onto a second optical fiber, a third collimator facing the light receiving plane of the first polarizer and disposed at a position different from that of the first collimator, for focusing a ray emitted from a third optical fiber, and a fourth collimator facing the light emitting plane of the first polarizer and disposed at a position different from that of the second collimator, for focusing a ray emitted from the third collimator via the optical isolator onto a fourth optical fiber; characterised by further comprising: a tap formed on a light receiving plane of the first polarizer, said light receiving plane facing said first collimator; a first photodetector for receiving a first incident ray reflected from the tap and detecting the optical power of the first incident ray; and a second photodetector for receiving a second incident ray reflected from the tap and detecting the optical power of the second incident ray.

Preferably, said multi-stage combined optical device further comprises: a collimator for focusing incident rays onto the first and/or second photodetectors on the optical path between the tap and the first photodetector and/or between the tap and the second photodetector.

Preferably, the first and second polarizers are each shaped to form a birefringent crystal wedge whose bottom plane is wider than its top plane; and said first and second polarizers being arranged linearly symmetrical with each other around the Faraday rotator.

Preferably, a glass ferrule for aligning each of the first through fourth optical fibers is provided at ends thereof.

Preferably, the first through fourth collimators are graded index lenses, respectively.

For a better understanding of the invention, and to show how embodiments of the same may be carried into effect, reference will now be made, by way of example, to the accompanying diagrammatic drawings, in which:
Figure 1 illustrates an optical arrangement of a multi-stage combined optical device;
Figure 2 is a schematic cross-sectional view illustrating a connection relationship between a glass ferrule and a collimator;
Figure 3 illustrates an optical arrangement of a multi-stage combined optical device according to an embodiment of the present invention; and
Figure 4 illustrates an optical arrangement of a multi-stage combined optical device according to still another embodiment of the present invention.

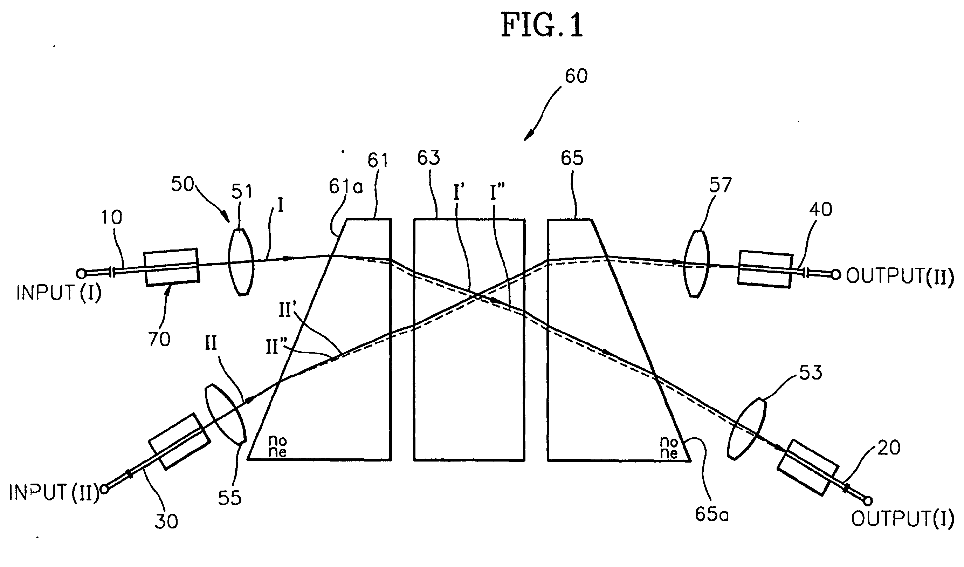

Referring to Figure 1, a multi-stage combined optical device is arranged on optical paths among first through fourth optical fibers 10, 20, 30 and 40 for transmitting light signals. The multi-stage combined optical device transmits the rays emitted from the first and third optical fibers 10 and 30 to the second and fourth optical fibers 20 and 40 according to a polarization mode of an incident ray, respectively, and suppresses the rays emitted from the second and fourth optical fibers 20 and 40 to travel toward the first and third optical fibers 10 and 30.

To this end, the multi-stage combined optical device includes first and third collimators 51 and 55 for focusing first and second incident rays I and II transmitted from the first and third optical fibers 10 and 30, an optical isolator 60, and second and fourth collimators 53 and 57 for focusing the rays emitted from the optical isolator 60 onto the second and fourth optical fibers 20 and 40.

The first and third collimators 51 and 53 are opposite with respect to a light receiving plane of the optical isolator 60, and the first collimators 51 focuses the ray irradiated from the first optical fiber 10 to make collimated light.

Here, the first and third collimators 51 and 55 are disposed at different positions of a light receiving plane 61a of the optical isolator 60 and this arrangement prevents the first and second incident rays I and II transmitted from the respective collimators 51 and 55 from interfering with each other.

The optical isolator 60 includes a first polarizer 61 for birefringently transmitting the first and second incident rays I and II, a Faraday rotator 63 for rotationally transmitting the incident rays, and a second polarizer 65 for inversely transmitting an incident ordinary ray and an extraordinary ray, these elements being arranged sequentially along an optical path. Here, the first polarizer 61 has a birefringent crystal wedge shape, separates the first incident ray I into first and second rays I' and I", and separates the second incident ray II into third and fourth rays II' and II". The first and third rays I' and II' are ordinary rays refracted according to a ordinary refractive index no of the first polarizer 61, and the second and fourth rays I" and II" are extraordinary rays refracted according to an extraordinary refractive index *nₑ* of the first polarizer 61.

The first polarizer 61 has a predetermined crystal optical axis, the first and third rays I' and II' have polarization directions parallel to the crystal optical axis of the first polarizer 61, and the second and fourth rays I" and II" have polarization directions vertical to the crystal optical axis.

The Faraday rotator 63 rotates the polarization direction of an incident ray a predetermined amount and transmits the same.

The second polarizer 65 has a birefringent crystal wedge shape, like the first polarizer 61, and has another crystal optical axis different from that of the first polarizer 61. In other words, the crystal optical axis of the second polarizer 65 is twisted a predetermined angle in an opposite direction of the polarization rotation of the Faraday rotator 63 with respect to the crystal optical axis of the first polarizer 61.

Thus, the first and third rays I' and II' transmitted from the second polarizer 65 are turned into extraordinary rays, and the second and fourth rays I" and II" are turned into ordinary rays.

The first and second polarizers 61 and 65 are linearly symmetrically disposed around the Faraday rotator 63, and have wedge shapes whose bottom planes are wider than the top planes.

The second collimator 53 is disposed to face a light emitting plane 65a of the optical isolator 60 and focuses the first and second rays I' and I" emitted from the optical isolator 60 onto the second optical fiber 20. The fourth collimator 57 is disposed to face the light emitting plane 65a of the optical isolator 60 and focuses the third and fourth rays II' and II" emitted from the optical isolator 60 onto the fourth optical fiber 40. Here, the second and fourth collimators 53 and 57 are disposed at different positions from each other so that they can focus the first and second incident rays I and II, respectively.

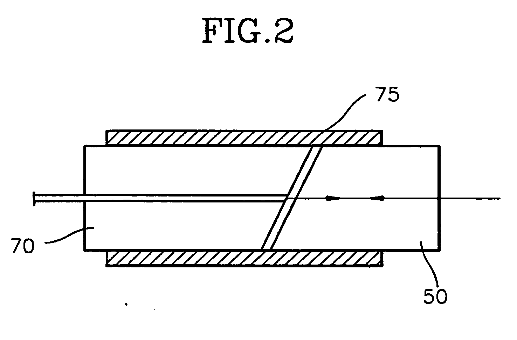

Here, the first through fourth optical fibers 10, 20, 30 and 40 are preferably aligned by the glass ferrule 70, as shown in Figures 1 and 2.

Also, the first through fourth collimators 51, 53, 55 and 57 are preferably a graded index (GRIN) lens 50, as shown in Figure 2, and the GRIN lens 50 is coupled to the glass ferrule 70 by a holder 75.

Hereinbelow, the operation of the multi-stage combined optical device according to a first embodiment of the present invention will be described with reference to Figures 1 and 2.

First, the first incident ray I transmitted through the first optical fiber 10 is focused in the first collimator 51 and is received in the light receiving plane 61a of the first polarizer 61. The received first incident ray I is birefringently refracted into the first ray I' which is an ordinary ray and the second ray I" which is an extraordinary ray along the crystal optical axis of the first polarizer 61, and is directed toward the second collimator 53 via the Faraday rotator 63 and the second polarizer 65. Here, the first ray I' is turned into the extraordinary ray and the second ray I" is turned into the ordinary ray, along the rotational polarization direction of the Faraday rotator 63 and the crystal optical axis of the second polarizer 65. Thus, the first and second rays I' and I"are incident onto the second collimator 53 in parallel with each other, without a difference between their optical paths. The incident light is transmitted from the second collimator 53 and is focused to then be output through the second optical fiber 20.

The second incident ray II input through the third optical fiber 30 is focused in the third collimator 55 and then is transmitted to the fourth optical fiber 40 via the optical isolator 60 and the fourth collimator 57. Changes to the second incident ray II are substantially the same as those of the first incident ray I, and the detailed explanation thereof will be omitted.

Rays (not shown) incident from the second and fourth optical fibers 20 and 40 to the optical isolator 60 travel in different traveling paths from those of the first and second incident rays I and II, so that their transmission to the first and third optical fibers 10 and 30 is suppressed.

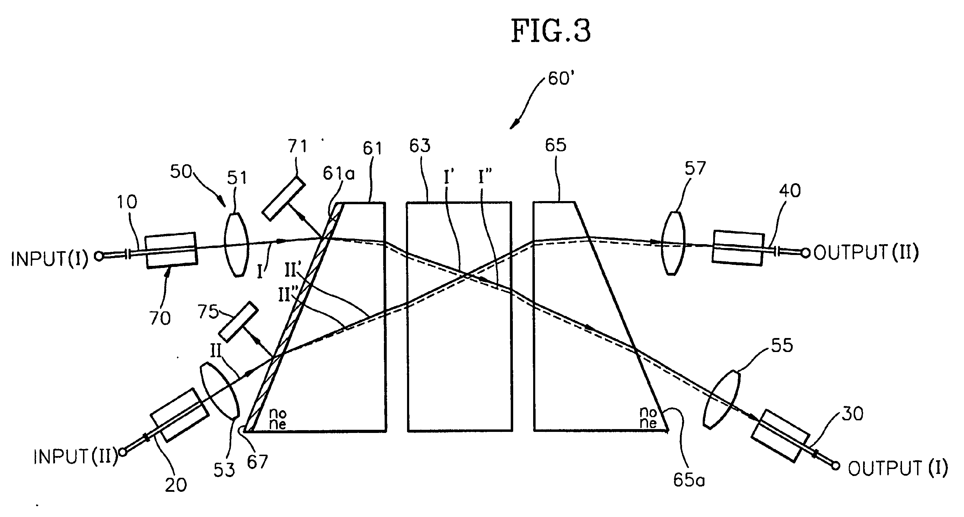

Referring to Figure 3, a multi-stage combined optical device according to an embodiment of the present invention is arranged on optical paths among first through fourth optical fibers 10, 20, 30 and 40 for transmitting light signals, and includes first and second collimators 51 and 53 for focusing first and second incident rays I and II transmitted from the first and second optical fibers 10 and 20, an optical isolator 60', third and fourth collimators 55 and 57 for focusing the rays emitted from the optical isolator 60' onto the third and fourth optical fibers 30 and 40, and first and second photodetectors 71 and 75 for receiving the light reflected from the optical isolator 60'.

Here, the structures of the first through fourth collimators 51, 53, 55 and 57 and their optical arrangement are substantially the same as those in the above-described first apparatus, and the detailed explanation thereof will be omitted.

The optical isolator 60' includes a first polarizer 61 for birefringently transmitting the first and second incident rays I and II, a Faraday rotator 63 for rotationally transmitting the incident rays, a second polarizer 65 for inversely transmitting an incident ordinary ray and an extraordinary ray, and a tap 67 formed on the light receiving plane 61a of the first polarizer 61, these elements being arranged sequentially along an optical path. The tap 67 can be formed by coating a material having a predetermined reflectivity, i.e., a material which can transmit most incident rays and can reflect parts thereof, by a conventional manner, e.g., chemical vapor deposition or sputtering.

The tap 67 transmits most of the first and second incident rays I and II emitted from the first and second optical fibers 10 and 20 and reflects a predetermined portion thereof. The first and second incident rays I and II transmitted by the tap 67 are directed toward the first polarizer 61 and the rays reflected by the tap 67 are incident onto the first and second photodetectors 71 and 75.

Here, the structures of the first and second polarizers 61 and 65, and the Faraday rotator 63, and their optical arrangement are substantially the same as those in the above-described first embodiment, and the detailed explanation thereof will be omitted.

The respective rays reflected by the tap 67 are received in the first and second photodetectors 71 and 75. The first and second photodetectors 71 and 75 detect the optical power of the light signals transmitted from the incident light through the first and second optical fibers 10 and 20, from which the amplification degree of the light signals transmitted through a predetermined optical amplifier (not shown) can be detected.

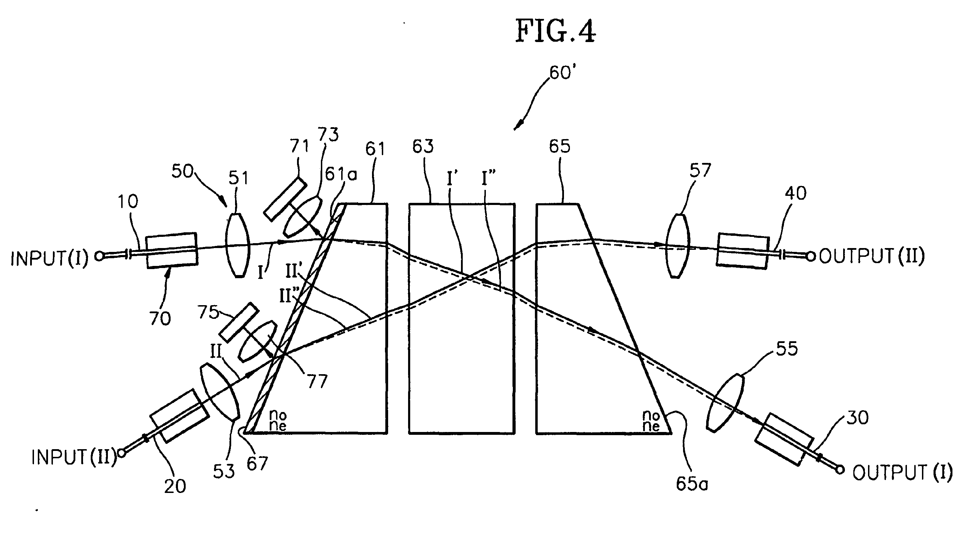

Also, as shown in Figure 4, fifth and sixth collimators 73 and 77 for focusing the incident rays and increasing the light detection efficiency may be further provided on the optical path(s) between the tap 67 and the first photodetector 71 and/or between the tap 67 and the second photodetector 75.

Now, the operation of the multi-stage combined optical device according to the second embodiment of the present invention will be described with reference to Figure 3.

The first incident ray I transmitted through the first optical fiber 10 is focused in the first collimator 51 and then is incident onto the tap 67. The tap 67 transmits most of the incident rays toward the first polarizer 61 and reflects a portion of the rays to the first photodetector 71. The first photodetector 71 detects the optical power of the rays transmitted from the incident rays through the optical fiber 10. The first incident ray I received in the first polarizer 61 is directed toward the second collimator 53 via the Faraday rotator 63 and the second polarizer 65, in a birefringent state into the first ray I' which is an ordinary ray and the second ray I" which is an extraordinary ray, along the crystal optical axis of the first polarizer 61. Here, the first ray I' is turned into the extraordinary ray and the second ray I" is turned into the ordinary ray along the rotational polarization direction of the Faraday rotator 63 and the crystal optical axis of the second polarizer 65. Thus, the two rays I' and I" are incident into the third collimator 55 in parallel with each other without a difference between their optical paths. The incident light transmits the third collimator 55 to then be focused and is output through the third optical fiber 30.

The second incident ray II received through the second optical fiber 20 is focused in the second collimator 53 and is incident onto the tap 67. Most of the rays are transmitted through the tap 67, and some of the rays are reflected therefrom to then be incident onto the second photodetector 75. The optical power of the light irradiated from the second optical fiber 20 can be detected from the light detected by the second photodetector 75. The rays transmitted through the tap 67 travel toward the fourth optical fiber 40 via the first polarizer 61, the Faraday rotator 63, the second polarizer 65 and the fourth collimator 57.

The multi-stage combined optical device described above can guide the traveling direction of first and second incident rays using a single optical isolator. Therefore, since only a single optical isolator is necessary, when the multi-stage combined optical device is employed in an optical amplifier necessitating two optical isolators, a simple optical arrangement can be attained. Also, the number of elements is reduced and the fabrication efficiency is improved. The optical power of light signals transmitted through two optical fibers can be detected simply and conveniently by forming a tap on a light receiving plane of a. polarizer.

## Claims

1. A multi-stage combined optical device comprising:
a first collimator (51) for collimating a ray emitted from a first optical fiber (10);
an optical isolator (60) having a first polarizer (61) for birefringently transmitting an incident ray into an ordinary ray and an extraordinary ray, a Faraday rotator (63) for rotationally transmitting said ordinary ray and said extraordinary ray, and a second polarizer (65) for inversely transmitting said ordinary ray and said extraordinary ray; said first polarizer (61), said Faraday rotator (63) and said second polarizer (65) being sequentially disposed on an optical path;
a second collimator (53) for focusing the light transmitted through the second polarizer (65) onto a second optical fiber (20);
a third collimator (55) facing the light receiving plane of the first polarizer (61) and disposed at a position different from that of the first collimator (51), for focusing a ray emitted from a third optical fiber (30); and
a fourth collimator (57) facing the light emitting plane of the second polarizer (65) and disposed at a position different from that of the second collimator (53), for focusing a ray emitted from the third collimator (55) via the optical isolator (60) onto a fourth optical fiber (40);
**characterised by** further comprising:
a tap (67) formed on a light receiving plane (61a) of the first polarizer (61), said light receiving plane facing said first collimator (51);
a first photodetector (71) for receiving a first incident ray reflected from the tap and detecting the optical power of the first incident ray; and
a second photodetector (75) for receiving a second incident ray reflected from the tap and detecting the optical power of the second incident ray.

2. The multi-stage combined optical device according to claim 1, further comprising a collimator (73,77) for focusing incident rays onto the first and/or second photodetectors on the optical path between the tap (67) and the first photodetector (71) and/or between the tap (67) and the second photodetector (75).

3. The multi-stage combined optical device according to claim 1 or 2, wherein the first and second polarizers (61,65) are each shaped to form a birefringent crystal wedge whose bottom plane is wider than its top plane; and said first and second polarizers (61,65) being arranged linearly symmetrical with each other around the Faraday rotator (63).

4. The multi-stage combined optical device according to one of claims 1 through 3, wherein a glass ferrule (70) for aligning each of the first through fourth optical fibers (10,20,30,40) is provided at ends thereof.

5. The multi-stage combined optical device according to one of claims 1 through 3, wherein the first through fourth collimators (51,53,55,57) are graded index lenses, respectively.

## Patentansprüche

1. Mehrstufige kombinierte optische Vorrichtung, umfassend:
einen ersten Kollimator (51) zum Kollimieren eines Strahls, der von einer ersten optischen Faser (10) emittiert wird,
einen optischen Isolator (60) mit einem ersten Polarisator (61) zum doppeltgebrochenen Transmittieren eines einfallenden Strahls in einem ordentlichen Strahl und in einem außerordentlichen Strahl, einen Faraday-Dreher (63) zum Transmittieren des ordentlichen Strahls und des außerordentlichen Strahls gedreht und einen zweiten Polarisator (65) zum inversen Transmittieren des ordentlichen Strahls und des außerordentlichen Strahls, wobei der erste Polarisator (61), der Faraday-Dreher (63) und der zweite Polarisator (65) der Reihe nach auf einem optischen Pfad angeordnet sind,
einen zweiten Kollimator (53) zum Fokussieren des durch den zweiten Polarisator (65) transmittierten Lichts auf eine zweite optische Faser (20),
einen dritten Kollimator (55), gegenüberliegend der Licht empfangenden Fläche des ersten Polarisators (61) und auf einer Position angeordnet, die von der des ersten Kollimators (51) verschieden ist, zum Fokussieren eines von einer dritten optischen Faser (30) emittierten Strahls und
einen vierten Kollimator (37), gegenüberliegend der Licht emittierenden Fläche des zweiten Polarisators (65) und auf einer Position angeordnet, die von der des zweiten Kollimators (53) verschieden ist, zum Fokussieren eines von dem dritten Kollimator (55) emittierten Strahls über den optischen Isolator (60) auf eine vierte optische Faser (40),
**dadurch gekennzeichnet, dass** sie des Weiteren umfasst:
eine reflektierende/transmittierende Platte (67), ausgebildet auf einer Lichtempfangsfläche (61 a) des ersten Polarisators (61), wobei die Licht empfangende Fläche dem ersten Kollimator (51) gegenüberliegt,
einen ersten Fotodetektor (71) zum Empfangen eines ersten einfallenden Strahls, reflektiert von der reflektierenden/transmittierenden Platte, und zum Detektieren der optischen Leistung des ersten einfallenden Strahls und
einen zweiten Fotodetektor (75) zum Empfangen eines zweiten einfallenden Strahls, reflektiert von der reflektierenden/transmittierenden Platte, und zum Detektieren der optischen Leistung des zweiten einfallenden Strahls.

2. Mehrstufige kombinierte optische Vorrichtung nach Anspruch 1, die des Weiteren einen Kollimator (73, 77) zum Fokussieren einfallender Strahlen auf den ersten und/oder den zweiten Fotodetektor auf dem optischen Pfad zwischen der reflektierenden/transmittierenden Platte (67) und dem ersten Fotodetektor (71) und/oder zwischen der reflektierenden/transmittierenden Platte (67) und dem zweiten Fotodetektor (75) umfasst.

3. Mehrstufige kombinierte optische Vorrichtung nach Anspruch 1 oder 2, wobei der erste und der zweite Polarisator (61, 65) jeder geformt sind, um einen doppeltbrechenden Kristallkeil zu bilden, dessen Bodenfläche breiter als seine Oberseitenfläche ist, und wobei der erste und der zweite Polarisator (61, 65) linear symmetrisch miteinander um den Faraday-Dreher (63) angeordnet sind.

4. Mehrstufige kombinierte optische Vorrichtung nach einem der Ansprüche 1 bis 3, wobei eine Glas-Ferrule (70) zum Fluchten jeder der ersten bis einschließlich vierten optischen Faser (10, 20, 30, 40) an Enden davon bereitgestellt ist.

5. Mehrstufige kombinierte optische Vorrichtung nach einem der Ansprüche 1 bis 3, wobei der erste bis einschließlich vierte Kollimator (51, 53, 55, 57) jeweils Gradientenlinsen sind.

## Revendications

1. Dispositif optique combiné à étages multiples, comportant :
un premier collimateur (51) pour collimater un rayon émis par une première fibre optique (10),
un isolateur optique (60) ayant un premier polariseur (61) pour émettre de manière biréfringente un rayon incident en un rayon ordinaire et un rayon extraordinaire, un rotateur de Faraday (63) pour émettre de manière rotationnelle ledit rayon ordinaire et ledit rayon extraordinaire, et un second polariseur (65) pour inversement émettre ledit rayon ordinaire et ledit rayon extraordinaire, ledit premier polariseur (61), ledit rotateur de Faraday (63) et ledit second polariseur (65) étant disposés en succession sur un trajet optique,
un deuxième collimateur (53) pour focaliser la lumière émise à travers le second polariseur (65) sur une seconde fibre optique (20),
un troisième collimateur (55) situé face au plan de réception de lumière du premier polariseur (61) et disposé à une position différente de celle du premier collimateur (51), pour focaliser un rayon émis par une troisième fibre optique (30), et
un quatrième collimateur (57) situé face au plan d'émission de lumière du second polariseur (65) et disposé à une position différente de celle du deuxième collimateur (53), pour focaliser un rayon émis par le troisième collimateur (55) via l'isolateur optique (60) sur une quatrième fibre optique (40),
**caractérisé en ce qu'**il comporte de plus :
une prise (67) formée sur un plan de réception de lumière (61a) du premier polariseur (61), ledit plan de réception de lumière étant situé face audit premier collimateur (51),
un premier photodétecteur (71) pour recevoir un premier rayon incident réfléchi par la prise et détecter la puissance optique du premier rayon incident, et
un second photodétecteur (75) pour recevoir un second rayon incident réfléchi par la prise et détecter la puissance optique du second rayon incident.

2. Dispositif optique combiné à étages multiples selon la revendication 1, comportant de plus un collimateur (73, 77) pour focaliser des rayons incidents sur les premier et/ou second photodétecteurs sur le trajet optique entre la prise (67) et le premier photodétecteur (71) et/ou entre la prise (67) et le second photodétecteur (75).

3. Dispositif optique combiné à étages multiples selon la revendication 1 ou 2, dans lequel les premier et second polariseurs (61, 65) sont chacun façonnés pour former un coin cristallin biréfringent dont le plan inférieur est plus large que son plan supérieur, et lesdits premier et second polariseurs (61, 65) étant agencés linéairement symétriques l'un à l'autre autour du rotateur de Faraday (63).

4. Dispositif optique combiné à étages multiples selon l'une quelconque des revendications 1 à 3, dans lequel un fourreau en verre (70) pour aligner chacune des première à quatrième fibres optiques (10, 20, 30, 40) est disposé aux extrémités de celles-ci.

5. Dispositif optique combiné à étages multiples selon l'une quelconque des revendications 1 à 3, dans lequel les premier à quatrième collimateurs (51, 53, 55, 57) sont des lentilles à indice progressif, respectivement.
